# FASCICULE DE BREVET EUROPEEN

(11) **EP 3 556 130 B1**
(45) Date de publication et mention de la délivrance du brevet: **26.01.2022**
(21) Numéro de dépôt: 17822727.8
(22) Date de dépôt: 13.12.2017
(51) Int. Cl.: H04W 12/12, H04L 29/06, H04L 29/12, H04W 88/08

(54) **PROCÉDÉ DE SURVEILLANCE D'UN RÉSEAU DE TÉLÉCOMMUNICATIONS MIS EN OEUVRE PAR UN POINT D'ACCÈS**
ÜBERWACHUNGSVERFAHREN EINES TELEKOMMUNIKATIONSNETZ VON EINEM ZUGANGSPUNKT IMPLEMENTIERT
METHOD OF SURVEILLANCE OF A TELECOMMUNICATIONS NETWORK IMPLEMENTED BY AN ACCESS POINT

(30) Priorité: 16.12.2016 FR 1662696
(43) Date de publication de la demande: 23.10.2019
(73) Titulaire: ORANGE, 92130 Issy-les-Moulineaux (FR)
(72) Inventeur: BOUVET, Bertrand, 92326 CHÂTILLON Cedex (FR); BOIZARD, Stéphane, 92326 CHÂTILLON Cedex (FR)
(86) Numéro de dépôt international: PCT/FR2017/053541
(87) Numéro de publication internationale: WO 2018/109377

(56) Documents cités:
- WO-A1-2014/128256
- FR-A1- 2 902 905
- GB-A- 2 421 156
- US-A1- 2003 154 399
- US-A1- 2008 028 467
- US-A1- 2016 261 611

## Description

### Arrière-plan de l'invention

L'invention se rapporte au domaine général des télécommunications.

Elle concerne plus particulièrement la détection de fraudes susceptibles d'affecter un réseau de télécommunications disposant d'un ou de plusieurs points d'accès.

Aucune limitation n'est attachée à la nature de l'accès au réseau de télécommunications. Il peut s'agir d'un réseau fixe de type ADSL (Asymmetric Digital Subscriber Line), VDSL (Very high bit rate Digital Subscriber Line), fibre optique ou encore réseau câblé pour lequel le point d'accès peut être notamment une passerelle aussi couramment désignée par « box » en anglais ; il peut en variante s'agir d'un réseau mobile de type WIFI (Wireless Fidelity) ou 2G/3G/4G/5G pour lequel le point d'accès peut alors être un dongle ou un téléphone intelligent (ou « smartphone » en anglais) configuré en point d'accès, etc.

De façon connue, un point d'accès à un réseau de télécommunications obtient de façon statique ou dynamique, lors de son démarrage, au moins une adresse IP dite publique (qui peut-être une adresse IP privée dans certains cas/services) ou externe sur le réseau lui permettant d'accéder aux services offerts par celui-ci, comme par exemple accès à Internet ou à un intranet, accès à un service de téléphonie, etc. Cette adresse IP publique attribuée au point d'accès est classiquement associée au port WAN (Wide Area Network) de ce dernier.

Le point d'accès fournit par ailleurs lui-même, aux équipements qui lui sont connectés via un réseau local (ou LAN pour Local Area Network), des adresses IP dites privées ou internes sur ce réseau local, par exemple via un serveur DHCP (Dynamic Host Configuration Protocol) interne au point d'accès. Toutefois, ces adresses IP privées qui sont internes au réseau local ne peuvent être utilisées pour accéder à des services proposés par le réseau de télécommunications WAN. On note que dans la suite de la description, la terminologie « réseau WAN » est utilisée pour désigner de façon générale le réseau externe auquel le point d'accès permet d'accéder par opposition à son réseau local. Aucune limitation n'est toutefois attachée à la nature de ce réseau (réseau public ou privé, etc.).

Pour permettre à un équipement du réseau local de se connecter à un service externe offert par le réseau de télécommunications WAN, ou de recevoir des flux en provenance du réseau de télécommunications WAN, le point d'accès maintient et utilise une table d'associations d'adresses, aussi appelée table NAPT (pour Network Address and Port Translation). Chaque entrée de cette table associe plusieurs informations entre elles, à savoir notamment :
- l'adresse IP privée attribuée à l'équipement sur le réseau local ;
- l'adresse IP publique attribuée au point d'accès sur au moins une de ses interfaces WAN;
- le numéro de port privé utilisé par l'équipement sur le réseau local ;
- le numéro de port public (port WAN) utilisé par le point d'accès pour communiquer sur le réseau externe ; et
- un protocole de transport (ex. TCP, UDP, SCTP, etc.) des flux émis et reçus par l'équipement.

Cette table NAPT est utilisée par le point d'accès pour router en mode bidirectionnel des flux véhiculant des paquets IP entre les équipements du réseau local et des équipements ou dispositifs du réseau WAN. Ainsi, quand un paquet IP est reçu par le point d'accès en provenance du réseau externe, celui-ci compare l'adresse IP et le port de destination du paquet IP reçu avec le contenu des entrées de la table NAPT. Si la table NAPT contient une entrée dont l'adresse IP publique et le numéro de port public coïncident avec l'adresse IP et le port de destination du paquet IP reçu, il remplace l'adresse IP et le port de destination du paquet IP reçu par l'adresse IP privée et le port privé associés à cette entrée. Puis le paquet IP est routé sur le réseau local.

De façon similaire, quand un paquet IP est émis par un équipement du réseau local à destination d'un équipement du réseau WAN, le point d'accès compare l'adresse IP source et le port source du paquet IP reçu avec les entrées de la table NAPT de sorte à identifier l'adresse IP publique et le port public associés. Puis l'adresse IP source et le port source du paquet IP sont remplacés par le point d'accès par l'adresse IP publique et le port public identifiés. Le paquet est alors routé sur le réseau externe WAN.

Il convient de noter que seuls les flux venant des équipements du réseau local sont aptes à déclencher la création d'une entrée dans la table NAPT. Autrement dit, pour autoriser des échanges de données bidirectionnels entre un équipement du réseau local du point d'accès et un équipement du réseau WAN auquel permet d'accéder le point d'accès, il est obligatoire que le premier échange entre ces deux équipements soit à l'initiative de l'équipement du réseau local afin qu'une entrée soit créée dans la table NAPT permettant la connexion du réseau local avec le réseau WAN. En aucun cas la création d'une entrée dans la table NAPT n'est possible si le premier échange est à l'initiative de l'équipement du réseau WAN.

D'autres mécanismes de protection du réseau local peuvent être envisagés au niveau du point d'accès, comme par exemple le recours à une fonction de pare-feu pour sécuriser le point d'accès via des règles prédéfinies, ou à une fonction de contrôle parental permettant de créer des règles de connectivité ou d'accès à des services offerts par le réseau externe (ex. inscription sur une liste noire de certaines adresses (URL, Uniform Resource Locator), etc.).

Ces mécanismes sont toutefois inefficaces vis-à-vis de certaines fraudes et notamment les fraudes qui consistent à pirater des équipements du réseau local d'un utilisateur afin d'usurper son identité et accéder à différents services offerts par le réseau WAN à ses frais.

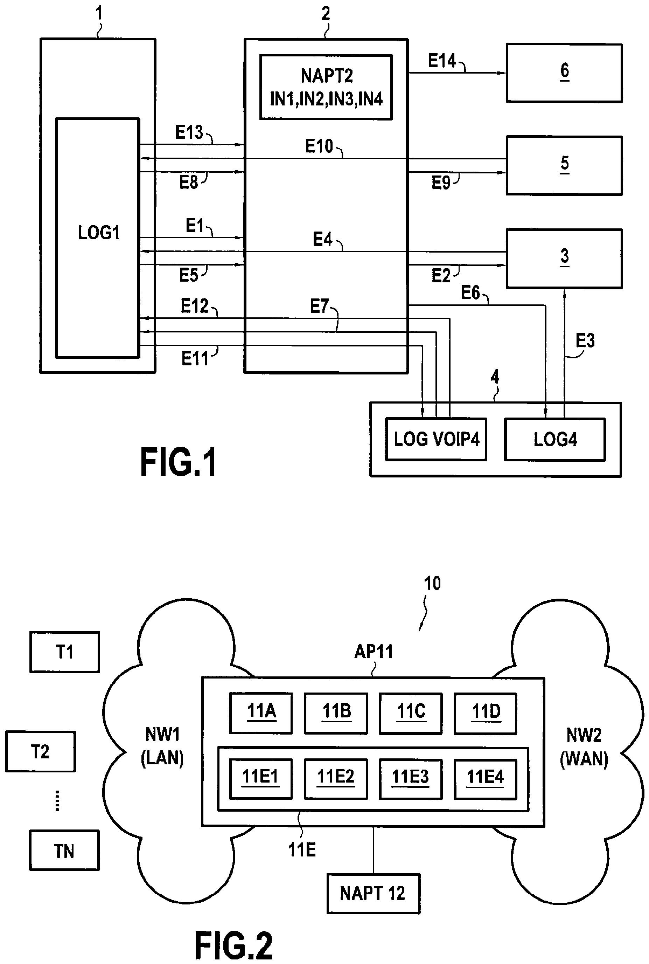

Un exemple d'une telle fraude est illustré en référence à la **figure 1** et décrit brièvement ci-après.

On suppose qu'un pirate informatique est parvenu à installer sur le terminal 1 d'un utilisateur un logiciel dit pirate LOG1. Ce terminal 1 est connecté à un réseau local LAN comprenant un point d'accès 2 (ex. une « box ») à un réseau WAN tel que par exemple le réseau public Internet. Le point d'accès 2 maintient, comme mentionné précédemment, une table d'associations d'adresses NAPT2.

Le logiciel LOG1 est un logiciel dit de tunnelling, qui est utilisé par le pirate informatique pour ouvrir des ports sur le point d'accès 2. On suppose qu'il est activé à chaque démarrage (« boot ») du terminal 1, et que suite à cette activation, il est configuré pour se connecter à un serveur 3 (« pirate »), lui-même connecté au réseau Internet (étapes E1 et E2). Cette connexion créée une nouvelle entrée IN1 dans la table NAPT2.

De son côté, le pirate informatique active également sur son terminal 4 un logiciel de tunnelling LOG4 qui se connecte au serveur 3 (étape E3). Lors de cette connexion le terminal 4 fournit au serveur 3 son adresse IP et son numéro de port sur lequel il écoute le réseau.

Le serveur 3 fournit alors les informations de connectivité (adresse IP et port) du terminal 4 au logiciel LOG1 installé sur le terminal 1 de l'utilisateur piraté (étape E4). Le flux transportant ces informations est autorisé à rentrer sur le réseau LAN au niveau du point d'accès 2 puisqu'une entrée IN1 dans la table NAPT2 a été précédemment créée, à l'initiative du terminal 1 vers le serveur 3.

Le logiciel pirate LOG1 présent sur le terminal 1 demande alors l'établissement d'un tunnel avec le terminal 4 du pirate informatique sur la base des informations de connectivité reçues du serveur 3 (étapes E5 et E6). Cette requête envoyée au terminal 4 créée une nouvelle entrée IN2 dans la table NAPT2 maintenue par le point d'accès 2.

Un tunnel est alors établi entre le terminal 1 et le terminal 4.

Suite à l'établissement de ce tunnel, le pirate informatique active par exemple un logiciel de voix sur IP LOGVoIP4 installé sur son terminal 4, lui permettant de communiquer sur le réseau d'un opérateur de téléphonie VoIP auprès duquel l'utilisateur du terminal 1 est abonné. Le logiciel LOGVoIP4 envoie, suite à son lancement, vers une plateforme de gestion 5 (« Device Management » en anglais) de l'opérateur de téléphonie, une requête comprenant une demande de fichier de configuration (étape E7).

Cette requête est encapsulée dans le tunnel établi entre le terminal 4 et le terminal 1, et est acheminée jusqu'au terminal 1, bénéficiant de l'entrée IN2 précédemment créée dans la table NAPT2.

Sur réception de la requête encapsulée dans le tunnel, le terminal 1 désencapsule la requête puis l'envoie vers la plateforme de gestion 5 de l'opérateur de téléphonie (étapes E8,E9). Cette envoi créée une nouvelle entrée IN3 dans la table NAPT2 du point d'accès 2.

La plateforme de gestion 5 récupère l'adresse IP source de la requête (adresse IP publique du point d'accès 2), et effectue les contrôles habituels lui permettant de confirmer que l'utilisateur du terminal 1 est bien abonné au service de téléphonie VoIP. Suite à cette confirmation, il génère le fichier de configuration requis, puis le renvoie au terminal 1 (étape E10). La réponse de la plateforme de gestion 5 est acheminée jusqu'au terminal 1 grâce à l'entrée IN3 précédemment créée dans la table NAPT2.

Puis elle est renvoyée par le terminal 1 au terminal 4 via le tunnel établi entre les deux terminaux (étape E11). Le fichier de configuration est fourni au logiciel LOGVoIP4. Celui-ci peut ainsi se connecter au réseau de l'opérateur de téléphonie VoIP avec les informations de configuration du terminal 1.

Selon le même principe qu'à l'étape E7, le logiciel LOGVoIP4 se connecte au cœur de réseau 6 de l'opérateur de téléphonie VoIP pour s'enregistrer, en utilisant les informations de configuration reçues (étapes E12, E13, E14). La signalisation SIP associée créée une nouvelle entrée IN4 dans la table NAPT2 du point d'accès 2. Une fois enregistré auprès du cœur de réseau 6, le pirate informatique peut passer des appels (par exemple surtaxés) en utilisant le compte de l'utilisateur piraté.

Il n'existe malheureusement pas aujourd'hui, dans l'état de la technique, de mécanismes efficaces permettant de se prémunir contre ce genre de fraudes qui s'appuient sur le rebond de flux IP sur les terminaux des utilisateurs piratés.

Le document US2016/261611A1 décrit un système pour détecter une activité réseau malveillante provenant de périphériques réseau tels que des routeurs et des pare-feux. Plus précisément, le système décrit permet de détecter des logiciels malveillants furtifs sur un périphérique réseau en comparant le trafic réseau entrant et sortant pour découvrir des paquets provenant du périphérique réseau et des paquets qui violent des règles de configuration.

### Objet et résumé de l'invention

L'invention vise notamment à pallier à ce problème en proposant un procédé permettant de sécuriser les réseaux de télécommunications fixes comme mobiles au niveau des points d'accès de ces réseaux. Ce procédé propose une technique avantageuse permettant de détecter au niveau des points d'accès les flux de données susceptibles d'être associés à un piratage exploitant les mécanismes de rebond de flux IP, offrant dès lors la possibilité d'avoir un large panel d'actions correctives pour enrayer ce piratage.

Plus précisément, l'invention propose un procédé de surveillance destiné à être mis en œuvre par un point d'accès à un réseau de télécommunications, ce point d'accès étant apte à maintenir une table d'associations d'adresses comprenant au moins une entrée associant à une adresse de transport privée une adresse de transport publique, chaque adresse de transport comprenant une adresse IP et un port, comme dans la revendication indépendante 1.

Corrélativement, l'invention vise aussi un point d'accès à un réseau de télécommunications, apte à maintenir une table d'associations d'adresses comprenant au moins une entrée associant à une adresse de transport privée une adresse de transport publique sur ledit réseau, chaque adresse de transport comprenant une adresse IP et un port, comme dans la revendication indépendante 13.

Aucune limitation n'est attachée au type de contenu applicatif considéré ; il peut s'agir de voix sur IP, de téléchargement FTP, de visualisation d'un flux vidéo de type TV/VOD (Video on Demand), interactions sur un jeu en réseau, l'accès à un flux en streaming, à une boîte mél, à un serveur DNS (Domain Name System), etc.

La solution proposée par l'invention consiste donc à exploiter la table d'associations d'adresses maintenue par le point d'accès et à détecter des flux de données entrants et sortants associés aux entrées de cette table d'association d'adresses ayant des profils de trafic similaires ou identiques sur une même fenêtre temporelle (autrement dit, transportant un contenu applicatif de même nature, tel que par exemple de la voix sur IP générée à partir d'une même application, téléchargement ftp d'un même contenu applicatif, etc.). Cette fenêtre temporelle est de durée limitée, typiquement quelques secondes voire dizaines de secondes.

Aucune limitation n'est attachée à la nature ni au nombre des caractéristiques examinées pour déterminer si des flux transportent le même type de contenu applicatif, autrement dit le même type de trafic (ex. voix sur IP, téléchargement FTP), issu de la même application, et/ou transportant des données applicatives similaires c'est-à-dire présentant des caractéristiques (de trafic notamment telles qu'un nombre de paquets, une périodicité, etc.) équivalentes ou correspondantes.

Ainsi, par exemple, ladite au moins une caractéristique mémorisée pour un flux peut comprendre au moins une caractéristique parmi :
- un protocole applicatif (ex. VoIP, FTP, HTTP, SMTP, DNS, etc.), utilisé par le flux durant la période de temps prédéfinie ;
- une signature applicative correspondant au contenu applicatif véhiculé par le flux durant la période de temps prédéfinie ;
- un nombre de paquets de données véhiculés par le flux durant la période de temps prédéfinie ;
- une taille de paquets de données véhiculés par le flux durant la période de temps prédéfinie ; et
- une périodicité des paquets de données véhiculés par le flux sur la période de temps prédéfinie.

Bien entendu, cette liste de caractéristiques n'est pas exhaustive et d'autres caractéristiques en plus ou en remplacement des précédentes peuvent être considérées, comme par exemple une information de différentiation de services présente dans l'entête des paquets de données véhiculés par le flux (ex. marquage DSCP (Differentiated Service Code Points) des entêtes paquets de données IP).

Il convient de noter par ailleurs que certaines caractéristiques peuvent être à elles seules discriminantes pour déterminer si un même type de contenu applicatif est transporté dans un flux entrant et dans un flux sortant associés à deux entrées distinctes de la table. C'est le cas par exemple de la signature applicative pour certains protocoles applicatifs (ex. protocole de voix sur IP) qui, dès lors qu'elle coïncide pour les deux flux comparés, suffit à déterminer qu'un même type de contenu applicatif (ex. voix sur IP générée à partir de l'application de voix sur IP Skype^{™}) est véhiculé par les deux flux.

D'autres caractéristiques au contraire doivent être combinées entre elles et c'est la coïncidence de la combinaison de ces caractéristiques qui permet au point d'accès d'identifier des contenus applicatifs de même nature véhiculés par deux flux entrant et sortant associés à deux entrées distinctes de la table d'associations d'adresses. En fonction de la ou des caractéristiques considérées, la coïncidence (ou correspondance) de ces dernières peut se manifester quelque peu différemment. Il peut s'agir par exemple d'une correspondance à l'identique (ex. identité des protocoles applicatifs) ou d'une similitude à un facteur de tolérance près. En outre, pour examiner cette coïncidence ou pour déterminer les caractéristiques elles-mêmes mémorisées, il peut s'avérer nécessaire de tenir compte d'une éventuelle fragmentation des paquets ou d'un éventuel décalage temporel entre les flux entrant et sortant.

Les inventeurs ont constaté que la présence d'entrées dans la table NAPT ayant des flux entrant et sortant présentant des profils de contenus applicatifs similaires est relativement rare dans les cas d'usage classique d'un point d'accès. Cette présence traduit en revanche la plupart du temps l'existence de fraudes exploitant des mécanismes de rebonds de flux IP tels que décrits précédemment, et qui se manifestent par le renvoi quasi à l'identique de flux reçus par un équipement d'un réseau local vers l'extérieur. L'invention propose donc d'exploiter cette propriété des flux entrant et sortant en présence de fraude pour pouvoir détecter une telle situation et être capable le cas échéant, d'y apporter une réponse circonstanciée (ex. alerter l'utilisateur du réseau local pour lui permettre par exemple de rechercher la présence d'un logiciel pirate sur ses équipements, bloquer les flux, etc.). Grâce à l'invention, la sécurité des réseaux peut être améliorée de façon simple et efficace.

On note que l'invention peut s'appliquer avantageusement dans de nombreux cas de figure. Ainsi, elle s'applique indépendamment du nombre d'adresses IP publiques allouées au point d'accès sur le réseau WAN ; il est en effet courant que le point d'accès se voit attribuer une adresse IP publique par service offert, ex. une adresse IP publique pour l'accès à Internet, une adresse IP publique pour les services de voix sur IP, une adresse IP publique pour la télévision, etc. Dans un tel contexte, la comparaison deux à deux des entrées de la table d'associations d'adresses permet de tenir compte de la pluralité d'adresses IP publiques allouées au point d'accès et de détecter l'utilisation de mécanismes de rebond IP tels que décrits précédemment.

L'invention s'applique aussi dans les cas où plusieurs rebonds sont mis en œuvre au sein du réseau local : par exemple, le contenu applicatif est reçu sur un premier terminal du réseau local qui le renvoie à un deuxième terminal du réseau local, qui peut alors à son tour soit le renvoyer vers un troisième terminal du réseau local, soit vers l'extérieur via une interface WAN du point d'accès, etc. La prise en compte de l'ensemble des entrées de la table d'associations d'adresses, indépendamment de leurs adresses privées et publiques, permet d'identifier une telle situation.

L'invention s'applique aussi dans les cas où le terminal du réseau local servant de terminal de rebond comporte plusieurs interfaces réseau sur le réseau local, donc avec plusieurs adresses IP privées. Dans ce cas, le logiciel de piratage installé sur le terminal de rebond du réseau local peut exploiter cette situation via les API (Application Programming Interface) disponibles au niveau du terminal, et utiliser plusieurs interfaces pour assurer le rebond avec par exemple réception du trafic sur une première interface et réexpédition du même trafic via une seconde interface.

Dans le cas d'un unique rebond dans le réseau local, le procédé de l'invention peut être simplifié en limitant les entrées pour lesquelles les caractéristiques des flux entrant et sortant sont mémorisées et comparées.

Plus précisément, dans un mode particulier de réalisation, l'étape de sélection peut comprendre la sélection de deux entrées correspondant à la même adresse IP privée dans la table d'associations d'adresses.

Corrélativement, le module de sélection du point d'accès peut être configuré pour sélectionner des entrées correspondant à la même adresse IP privée dans la table d'associations d'adresses.

En effet, dans le cas d'un unique rebond au sein du réseau local, les flux qu'il s'avère pertinent de surveiller et d'analyser pour détecter la présence de ce rebond correspondent à la même adresse IP privée (celle de l'équipement utilisé pour le rebond) : les flux sont transmis à un équipement du réseau local qui à son tour les renvoie quasiment à l'identique (à l'extraction près d'un tunnel le cas échéant) vers un réseau extérieur. La prise en compte de cette propriété permet ainsi de réduire la complexité du procédé selon l'invention, notamment en termes de mémoire mais également de capacité de traitement des caractéristiques des flux stockés.

Dans un mode particulier de réalisation, le procédé de surveillance comprend, pour au moins un des flux :
- une étape d'extraction de chaque paquet de données véhiculé par ce flux sur la période de temps prédéfinie, d'un entête et/ou d'au moins une partie des données utiles contenues dans le paquet ; et
- une étape de détermination d'au moins une caractéristique mémorisée pour ce flux à partir des entêtes et/ou des données utiles extraites des paquets de données véhiculés par le flux.

Ce mode de réalisation est particulièrement bien adapté en présence d'un tunnel (voire de plusieurs tunnels) entre l'équipement du réseau local servant de rebond et l'équipement pirate se trouvant dans le réseau externe. On note que la détection de la présence d'un tunnel peut se faire simplement en analysant les entêtes et les premiers octets des données utiles des paquets IP.

Comme mentionné précédemment, la détection permise par l'invention permet de mettre en œuvre des actions correctives circonstanciées.

Ainsi, dans un mode particulier de réalisation, le procédé de surveillance comprend en outre une étape de mise en œuvre d'au moins une action corrective en réponse à la détection d'un risque de fraude. Ladite au moins une action corrective peut comprendre par exemple au moins une action parmi :
- une suppression dans la table d'associations d'au moins une des entrées dudit couple d'entrées pour lequel il résulte de l'étape de comparaison qu'un flux entrant associé à l'une des entrées du couple transporte un contenu applicatif de même nature qu'un flux sortant associé à l'autre entrée du couple ;
- une notification de la détection du risque de fraude ; et
- un redémarrage du point d'accès.

Bien entendu, cette liste n'est pas exhaustive et bien d'autres actions peuvent être envisagées en variante.

En outre, avant d'envisager une action corrective, l'invention propose, dans un mode particulier de réalisation, de mettre en œuvre un processus très simple permettant de confirmer l'existence d'une fraude. Plus particulièrement, le procédé de surveillance peut comprendre en outre, en réponse à une détection d'un risque de fraude et pour un couple d'entrées pour lequel il résulte de l'étape de comparaison qu'un flux entrant associé à l'une des entrées du couple transporte un contenu applicatif de même nature qu'un flux sortant associé à l'autre entrée du couple :
- une étape d'insertion d'au moins un paquet comprenant un marqueur prédéterminé dans ledit flux entrant ;
- une étape de détection d'une présence ou d'une absence dudit au moins un paquet marqué dans ledit flux sortant ; et
- une étape de confirmation de l'existence d'une fraude si une présence dudit au moins un paquet marqué est détectée.

Corrélativement, le point d'accès peut comprendre en outre des modules activés en cas de détection d'un risque de fraude par le module de détection, et pour un couple d'entrées pour lequel le module de comparaison détermine qu'un flux entrant associé à l'une des entrées du couple transporte un contenu applicatif de même nature qu'un flux sortant associé à l'autre entrée du couple, ces modules comprenant :
- un module d'insertion, configuré pour insérer au moins un paquet comprenant un marqueur prédéterminé dans ledit flux entrant ;
- un module de vérification, configuré pour détecter une présence ou une absence dudit au moins un paquet marqué dans ledit flux sortant ; et
- un module de confirmation de l'existence d'une fraude si une présence dudit au moins un paquet marqué est détectée par le module de vérification.

Ce mode de réalisation, très simple et rapide à mettre en œuvre, permet de limiter les « fausses » détections, et d'éviter d'entreprendre des actions correctives inutilement.

Ce mode de réalisation peut en outre comprendre une étape de suppression dudit au moins un paquet marqué après ladite étape de détection ou ladite étape de confirmation.

Cette suppression permet de maintenir locale au point d'accès la vérification effectuée par celui-ci en cas de détection de risque de fraude. De cette sorte, non seulement la vérification conduite n'impacte pas le trafic nominal et donc n'a pas de conséquence potentiellement néfaste au niveau applicatif, mais en outre la détection de la fraude reste secrète vis-à-vis des fraudeurs.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en œuvre dans un point d'accès ou plus généralement dans un ordinateur, ce programme comportant des instructions adaptées à la mise en œuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de surveillance et le point d'accès selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente de façon schématique un exemple de fraude s'appuyant sur un mécanisme de rebond ;
- la figure 2 représente un système comprenant un point d'accès conforme à l'invention ;
- la figure 3 illustre un exemple d'une table d'associations d'adresses maintenue à jour par le point d'accès de la figure 2 ;
- la figure 4 représente de façon schématique l'architecture matérielle du point d'accès de la figure 1 ;
- la figure 5 illustre, sous forme d'ordinogramme, les principales étapes d'un procédé de surveillance selon l'invention, dans un mode particulier de réalisation dans lequel il est mis en œuvre par le point d'accès de la figure 2 ;
- les figures 6A et 6B représentent le format de paquets de données IP (encapsulés dans un tunnel pour la figure 6B) ; et
- la figure 7 illustre sous forme d'ordinogramme des comparaisons effectuées par le point d'accès de la figure 2.

### Description détaillée de l'invention

La **figure 2** représente, dans son environnement, un système 10 comprenant un ensemble d'équipements T1, T2,..., TN, N désignant un entier supérieur ou égal à 1, connectés à un réseau local NW1, ce réseau local étant lui-même connecté à un réseau de télécommunications externe NW2 (aussi désigné par la suite par réseau WAN NW2) par l'intermédiaire d'un point d'accès AP 11 conforme à l'invention.

Dans l'exemple envisagé à la figure 2, les équipements T1, T2,..., TN sont des terminaux (ex. ordinateur, téléphone intelligent, etc.) et le point d'accès AP 11 est une passerelle résidentielle de type box permettant d'accéder au réseau NW2. Toutefois, aucune limitation n'est attachée à la nature des équipements T1,...,TN, ni à la nature du point d'accès AP 11 qui dépend bien entendu de la nature de l'accès au réseau NW2 considéré. Ainsi, si cet accès est un accès de type 4G, le point d'accès AP 11 peut être un dongle ou un smartphone configuré en point d'accès.

Le point d'accès AP 11 comprend ici diverses fonctions classiquement implémentées par un point d'accès, comme par exemple une fonction de pare-feu, une fonction d'allocation dynamique d'adresses IP (fonction DHCP), une fonction de contrôle parental, etc. Ces fonctions sont connues en soi et non décrites en détail ici. On note que tous les flux entrant dans le réseau local NW1 et sortant du réseau local NW1 transitent par le point d'accès AP 11.

Dans l'exemple envisagé ici, une unique adresse IP a été allouée au point d'accès AP 11 pour communiquer sur le réseau NW2. On note @IPWAN11 cette adresse IP. Le point d'accès AP 11 dispose par ailleurs d'une pluralité de ports sur son interface WAN, notés PTWAN11a, PTWAN11b, etc.

Conformément à l'invention, le point d'accès AP11 comprend et maintient à jour, une table d'associations d'adresses NAPT 12, telle que décrite précédemment. Cette table est complétée par le point d'accès 11 avec une nouvelle entrée à chaque fois qu'un flux sortant est émis par l'un des terminaux T1,...,TN du réseau local NW1 à destination d'un équipement (ex. serveur) localisé sur un réseau externe au réseau local NW1, tel que typiquement dans le réseau NW2 (sauf bien entendu si une entrée correspondante existe déjà dans la table). On note, que conformément à la pratique courante, aucune entrée n'est créée dans la table NAPT 12 par un flux entrant dans le réseau LAN NW1 depuis un réseau externe. Dans la description, les notions de flux entrant et flux sortant sont utilisées en référence au réseau LAN NW1, autrement dit, un flux entrant (sous-entendu « entrant dans le réseau LAN NW1 ») est un flux qui vient d'un équipement externe au réseau LAN NW1, est destiné à un équipement du réseau LAN NW1, et entre sur le réseau local par l'interface WAN du point d'accès ; un flux sortant (sous-entendu « un flux sortant du réseau LAN NW1 ») est un flux émis par un équipement du réseau LAN NW1 à destination d'un équipement externe au réseau LAN NW1, et qui sort par l'interface WAN du point d'accès.

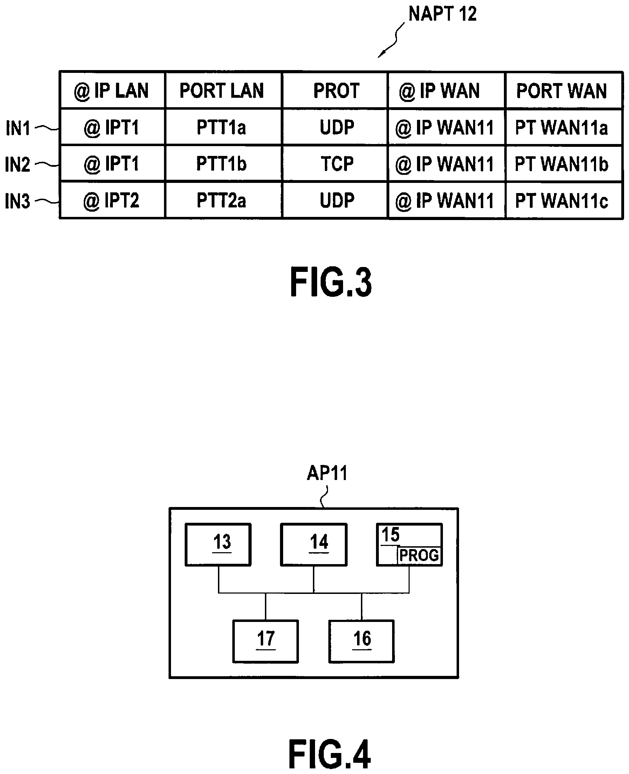

Un exemple de table NAPT 12 maintenue par le point d'accès AP 11 est illustré sur la **figure 3****.** Dans cet exemple, la table NAPT 12 comprend trois entrées IN1, IN2 et IN3, qui sont chacune des quintuplets. En variante, chaque entrée peut comporter un nombre plus importants d'éléments (ex. adresse IP et port du destinataire, etc.).

Chaque entrée comprend :
- l'adresse IP et le port du terminal à l'origine du flux sortant sur le réseau local (LAN) NW1, l'adresse IP en question étant celle allouée par le point d'accès AP 11 au terminal sur le réseau local NW1 (par exemple via sa fonction DHCP évoquée précédemment) ;
- le protocole de transport du flux (ex. TCP, UDP, SCTP, etc.) à l'origine de la création de l'entrée ; et
- l'adresse IP et le port du point d'accès sur son interface WAN. Dans l'exemple de la figure 3, cette adresse IP et ce port correspondent à l'unique adresse IP allouée au point d'accès AP 11 sur le réseau WAN NW2. Toutefois, en variante, plusieurs adresses IP peuvent être allouées au point d'accès.

Autrement dit, chaque entrée de la table associe à une adresse de transport privée ou interne au réseau local NW1 (cette adresse de transport privée comprenant une adresse IP et un port), une adresse de transport publique ou externe sur le réseau WAN NW2.

A titre illustratif, dans l'exemple de la figure 3 :
- l'entrée IN1 associe, pour le protocole UDP, à l'adresse IP @IPT1 allouée au terminal T1 par le point d'accès AP 11 sur le réseau NW1 et à son port PTT1a, l'adresse IP @IPWAN11 du point d'accès AP 11 sur le réseau NW2 ainsi que le port PTWAN11a de son interface WAN ;
- l'entrée IN2 associe, pour le protocole TCP, à l'adresse IP @IPT1 allouée au terminal T1 par le point d'accès AP 11 sur le réseau NW1 et à son port PTT1b, l'adresse IP @IPWAN11 du point d'accès AP 11 sur le réseau NW2 ainsi que le port PTWAN11b de son interface WAN ; et
- l'entrée IN3 associe pour le protocole UDP, à l'adresse IP @IPT2 allouée au terminal T2 par le point d'accès AP 11 sur le réseau NW1 et à son port PTT2a, l'adresse IP @IPWAN11 du point d'accès AP 11 sur le réseau NW2 ainsi que le port PTWAN11c de son interface WAN.

On note que de façon classique, les entrées de la table NAPT 12 ont une durée de vie variable en fonction du protocole de transport utilisé par les flux. Ainsi, avec le protocole UDP (mode dit sans connexion), l'entrée est supprimée de la table NAPT 12 si aucun trafic n'est échangé pendant environ 60s. Avec le protocole TCP (mode dit connecté), l'entrée est supprimée dans la table NAPT 12 dès que la session TCP est terminée, ou au-delà d'environ 45 mn si une session est établie mais qu'aucun trafic n'est détecté.

Dans le mode de réalisation décrit ici, le point d'accès AP 11 a l'architecture matérielle d'un ordinateur, telle qu'illustrée à la **figure 4****.** Il comprend notamment un processeur 13, une mémoire vive 14, une mémoire morte 15, une mémoire flash non volatile 16 ainsi que des moyens de communication 17 lui permettant de communiquer d'une part sur le réseau local NW1 avec les équipements connectés à ce réseau (et donc avec les terminaux T1,...,TN), et d'autre part sur le réseau WAN NW2. Ces moyens de communication incluent par exemple une interface WIFI, une carte réseau, etc. en fonction de la nature des réseaux NW1 et NW2.

La mémoire morte 15 du point d'accès AP 11 constitue un support d'enregistrement conforme à l'invention, lisible par le processeur 13 et sur lequel est enregistré ici un programme d'ordinateur PROG conforme à l'invention.

Le programme d'ordinateur PROG définit des modules fonctionnels (et logiciels ici), configurés pour mettre en œuvre les étapes du procédé de surveillance selon l'invention. Ces modules fonctionnels s'appuient sur et/ou commandent les éléments matériels 13-17 du point d'accès AP 11 cités précédemment. Ils comprennent notamment ici, comme illustré sur la figure 2 :
- un module de sélection 11A configuré pour sélectionner des entrées dans la table d'associations d'adresses NAPT 12 ;
- un module de mémorisation 11B configuré pour mémoriser une caractéristique prédéterminée obtenue sur une période de temps prédéfinie, pour chaque flux entrant et chaque flux sortant associés aux entrées sélectionnées par le module de sélection 11A ;
- un module de comparaison 11C, activé pour au moins un couple d'entrées sélectionnées, et configuré pour comparer, au moins une caractéristique mémorisée par le module de mémorisation pour un flux entrant associé à l'une des entrées du couple avec ladite au moins une caractéristique correspondante mémorisée pour un flux sortant associé à l'autre entrée du couple ; et
- un module de détection 11D d'un risque de fraude, activé si pour au moins un couple d'entrées, le module de comparaison détermine qu'un flux entrant associé à l'une des entrées du couple transporte un contenu applicatif de même nature qu'un flux sortant associé à l'autre entrée du couple.

Dans le mode de réalisation décrit ici, le programme PROG définit en outre un module de confirmation 11E, activé par le module de détection 11D lorsqu'un risque de fraude est détecté par celui-ci et pour un couple d'entrées pour lequel le module de comparaison 11C a déterminé qu'un flux entrant associé à l'une des entrées du couple transporte un contenu applicatif de même nature qu'un flux sortant associé à l'autre entrée du couple. Le module de confirmation 11E comprend ici les (sous-)modules suivants :
- un module d'insertion 11E1, configuré pour insérer au moins un paquet comprenant un marqueur prédéterminé dans ledit flux entrant ;
- un module de vérification 11E2, configuré pour détecter une présence ou une absence dudit au moins un paquet marqué dans ledit flux sortant ;
- un module de confirmation 11E3 de l'existence d'une fraude si une présence dudit au moins un paquet marqué est détectée par le module de vérification ; et
- un module de suppression 11E4 dudit au moins un paquet marqué à l'issue des opérations réalisées par le module de vérification 11E2 et/ou de confirmation 11E3.

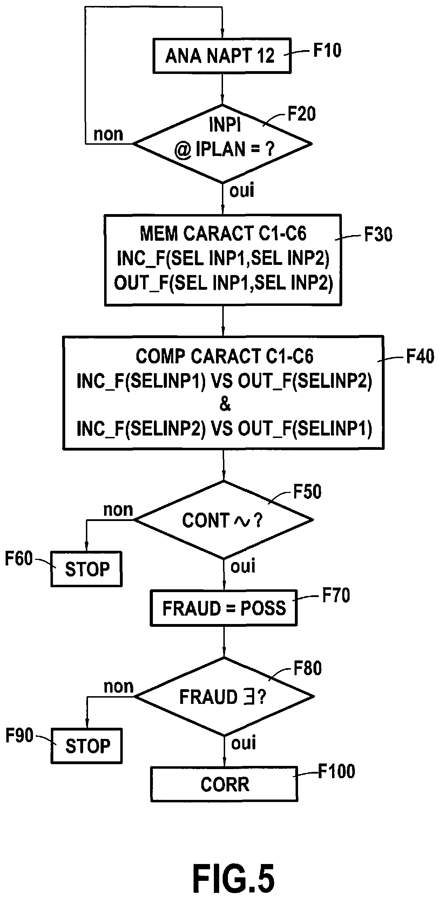

Les fonctions de ces différents modules sont décrites plus en détail maintenant, en référence à la **figure 5****,** qui représente sous forme d'ordinogramme, les principales étapes d'un procédé de surveillance selon l'invention tel qu'il est mis en œuvre par le point d'accès 11, dans un mode de réalisation particulier de l'invention.

Dans ce mode de réalisation, on s'intéresse à la détection d'une fraude s'appuyant sur un mécanisme de rebond tel qu'évoqué précédemment dans lequel un seul équipement du réseau local NW1 (i.e. un seul terminal dans l'exemple envisagé ici) assure une fonction de rebond. Cet équipement est par exemple ici le terminal T1 de la figure 2. Un tel mécanisme de rebond se traduit par le renvoi quasiment à l'identique par le terminal T1 d'un flux entrant précédemment reçu d'un équipement situé dans un réseau externe, vers un autre équipement de ce même réseau externe ou d'un autre réseau externe (à une désencapsulation près si le flux entrant est reçu dans un tunnel, et/ou une fragmentation près des paquets transportés par les flux). En tout état de cause, les flux entrant et sortant traités par le terminal T1 en cas de rebond transportent un contenu applicatif de même nature (i.e. de même type, autrement dit basé sur le même protocole applicatif, issu de la même application et/ou transportant des données applicatives similaires c'est-à-dire présentant des caractéristiques (de trafic notamment telles qu'un nombre de paquets, une périodicité, etc.) équivalentes ou correspondantes, comme par exemple de la voix sur IP générée à partir d'une application donnée, des données de téléchargement ftp, etc.). Le flux entrant parvenant au terminal T1 et le flux sortant correspondant au rebond sur le terminal T1 de ce flux entrant sont par ailleurs routés par le point d'accès AP 11 à partir d'entrées de la table NAPT partageant la même adresse IP privée interne au réseau local NW1 (à savoir celle que le point d'accès a attribuée au terminal T1 sur le réseau local NW1).

Dans le mode de réalisation décrit ici, pour détecter une fraude s'appuyant sur un tel mécanisme de rebond, le point d'accès 11 analyse donc, au moyen de son module de sélection 11A, le contenu de sa table NAPT 12 pour détecter la présence dans cette table de deux entrées distinctes correspondant à une même adresse IP privée (champ @IP LAN de la table NAPT 12 illustrée à la figure 3) (étapes F10 et F20). Cette analyse est conduite préférentiellement à chaque fois qu'une nouvelle entrée est ajoutée par le point d'accès AP 11 dans la table NAPT 12 en la comparant aux entrées existantes de la table.

Si deux entrées correspondant à la même adresse IP privée sont détectées dans la table NAPT 12 (c'est le cas par exemple des entrées IN1 et IN2 dans la table illustrée à la figure 3), le module de sélection 11A les sélectionne pour déterminer si elles sont liées à une fraude. On note SELINP1 et SELINP2 les deux entrées sélectionnées le cas échéant dans la table NAPT 12 par le module de sélection 11A.

Le point d'accès 11 mémorise, via son module de mémorisation 11B, pour chaque flux entrant (noté INC_F) et chaque flux sortant associés aux deux entrées sélectionnées au moins une caractéristique prédéterminée obtenue sur une période de temps prédéfinie notée T dans une mémoire tampon (étape F30). La période de temps T est par exemple prise égale à quelques secondes ou à quelques dizaines de secondes. On note que dans le mode de réalisation décrit ici, par souci d'économie en termes de ressources mémoire, les paquets de données IP transportés par les flux entrant et sortant correspondant aux entrées SELINP1 et SELINP2 sélectionnées ne sont pas mémorisés au niveau du point d'accès AP 11. Seules les caractéristiques obtenues à partir des flux sont mémorisées. Le point d'accès AP 11 utilise à cet effet ici une fenêtre glissante de durée T qu'il déplace sur les flux entrant et sortant de chacune des entrées sélectionnées par le module de sélection 11A. La mémorisation des caractéristiques d'un flux est déclenchée préférentiellement dès le démarrage de ce flux (autrement dit, dès la création de l'entrée dans la table). Les caractéristiques mémorisées sont supprimées de la mémoire tampon lorsque l'entrée est supprimée de la table ou si l'adresse IP privée associée à cette entrée ne correspond à aucune autre dans la table NAPT 12.

Dans la suite de la description, on note INC_F(SELINP1) et INC_F(SELINP2) les flux entrant associés respectivement aux entrées SELINP1 et SELINP2, et OUT_F(SELINP1) et OUT_F(SELINP2) les flux sortant associés respectivement aux entrées SELINP1 et SELINP2.

Comme mentionné précédemment, le module de mémorisation 11B détermine sur la fenêtre glissante de durée T, la ou les caractéristiques recherchées des flux surveillés et mémorise ces caractéristiques dans la mémoire tampon du point d'accès AP. Ceci est réalisé indépendamment pour chacun des flux entrant et sortant de chaque entrée sélectionnée.

Il convient de noter que le module de sélection 11A peut identifier dans la table NAPT 12 lors de son analyse, plusieurs couples d'entrées distincts partageant la même adresse IP privée. Le point d'accès 11 sélectionne et traite alors chacun de ces couples indépendamment et de la même façon qu'indiquée ici pour le couple d'entrées (SELINP1,SELINP2).

Dans le mode de réalisation décrit ici, plusieurs caractéristiques des flux entrant et sortant sont obtenues sur la fenêtre temporelle de durée T et mémorisées par le module de mémorisation 11B dans la mémoire tampon du point d'accès AP 11. Ces caractéristiques visent à permettre d'identifier conformément à l'invention, si des flux véhiculent des contenus applicatifs de même nature. Elles sont donc choisies préférentiellement de sorte à être représentatives ou tout du moins à permettre de discriminer, à elles seules ou prises en combinaison, les types de trafic véhiculés sur des flux et les applications à l'origine de ces trafics. Autrement dit encore, ces caractéristiques ont des valeurs qui dépendent des contenus applicatifs véhiculés par les flux sur lesquels elles sont déterminées et permettent de discriminer plusieurs contenus applicatifs entre eux.

Dans le mode de réalisation décrit ici, les caractéristiques considérées comprennent, pour chaque flux considéré (à savoir les flux INC_F(SELINP1), OUT_F(SELINP1), INC_F(SELINP2), OUT_F(SELINP2)) :
- une caractéristique C1 représentative du protocole applicatif utilisé par le flux durant la période de temps prédéfinie de durée T ;
- une caractéristique C2 représentative d'une signature applicative correspondant au contenu applicatif véhiculé par le flux durant la période de temps de durée T : une telle signature applicative permet dans certains cas, pour certains protocoles applicatifs (ex. protocole de voix sur IP) de reconnaître directement la nature du contenu applicatif véhiculée par le flux (ex. la voix sur IP générée par une application donnée) ;
- une caractéristique C3 représentative d'un nombre de paquets de données véhiculés par le flux durant la période de temps T ;
- une caractéristique C4 représentative d'une taille de paquets de données véhiculés par le flux durant la période de temps T ;
- une caractéristique C5 représentative d'une périodicité des paquets de données véhiculés par le flux considéré sur la période de temps T ; et
- une caractéristique C6 représentative d'une information de différentiation de services contenue dans les paquets de données véhiculés par le flux.

Bien entendu cette liste n'est pas exhaustive et d'autres caractéristiques peuvent être envisagées en variante ou en plus des caractéristiques précitées). Par ailleurs, seulement une partie de ces caractéristiques peut être également considérée.

Les caractéristiques C1 à C6 sont obtenues par le module de mémorisation 11B à partir des données présentes dans les entêtes des paquets IP véhiculés par chacun des flux surveillés durant la période de temps T et/ou à partir des données utiles transportées par ces paquets.

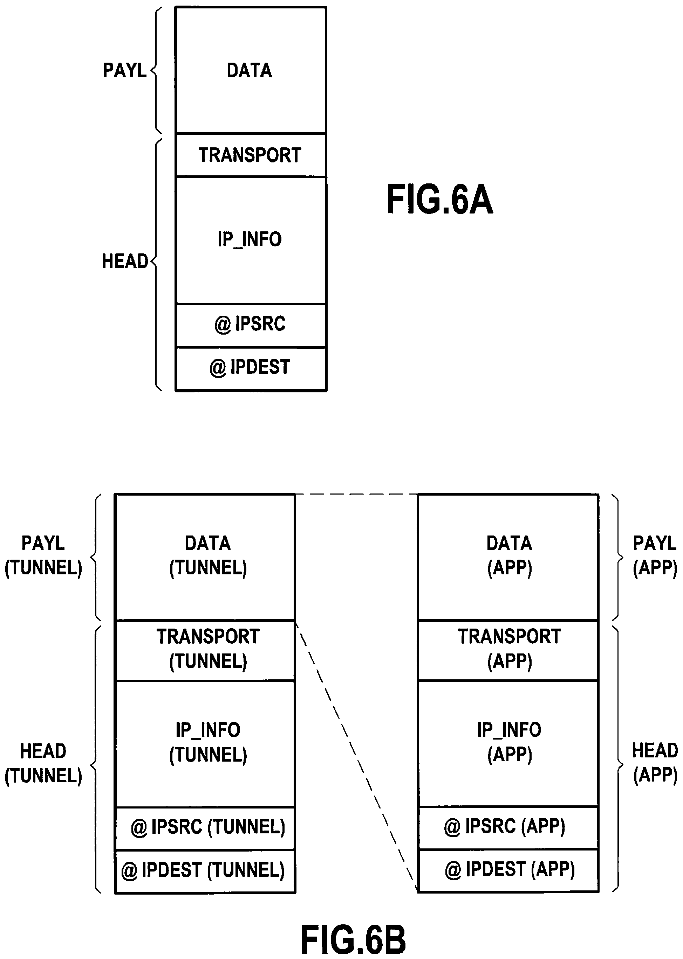

La **figure 6A** illustre schématiquement le format d'un paquet de données IP conforme au protocole IPv4 : ce paquet comprend de façon connue un entête IP, noté HEAD, et une partie dite utile notée PAYL comprenant plusieurs octets de données utiles DATA. Tout ou partie des données utiles DATA sont des données utiles applicatives. Elles peuvent éventuellement inclure également un entête IP (ayant un format identique à l'entête HEAD) si le flux est transmis dans un tunnel par exemple, cet entête correspondant à l'encapsulation du paquet de données applicatives dans ledit tunnel, comme illustré à la **figure 6B****.**

L'entête IP HEAD comprend 20 octets en version IPV4 répartis selon plusieurs champs (ou « headers » en anglais). Ces champs incluent un champ TRANSPORT spécifiant le protocole de transport utilisé pour véhiculer le flux, un champ @IPSRC contenant l'adresse IP source du paquet IP, et un champ @IPDEST contenant l'adresse IP destinataire du paquet IP, ainsi que divers champs regroupés sous la référence IP_INFO contenant notamment la longueur de l'entête HEAD, la longueur totale du paquet (c'est-à-dire incluant l'entête HEAD et la partie utile PAYL), le type de service concerné par le paquet (information de différentiation de services au sens de l'invention aussi appelée marquage DSCP), la version du protocole IP considérée pour l'adressage (ex. IPv4 ou IPv6), la position du fragment de trame contenu dans le paquet IP (utilisé en cas de fragmentation pour le réassemblage), etc. Ces différents champs et, plus généralement le format d'un paquet IP, sont connus de l'homme du métier et ne sont pas décrits en détail ici. Ils sont détaillés notamment dans le document IETF RFC 791 Internet Protocol.

Comme mentionné ci-dessus, le module de mémorisation 11B détermine les caractéristiques C1 à C6 des flux entrant et sortant mémorisés des deux entrées sélectionnées SELINP1 et SELINP2, à partir des entêtes des paquets IP véhiculés par chacun des flux surveillés et/ou à partir des données utiles transportées par ces paquets. On note qu'à cet effet, il peut s'avérer nécessaire pour le module de mémorisation 11B de détecter préalablement si un tunnel encapsulant les données applicatives est présent ou non. Cette détection peut être aisément mise en œuvre par le module de mémorisation 11B : lorsque les paquets IP véhiculés par un flux sont encapsulés dans un tunnel, les 20 premiers octets (dans le cas du protocole IPV4) de la partie utile PAYL de ces paquets correspondent en effet eux-mêmes à un entête de paquet IP comme illustré sur la figure 6B. Par conséquent, en analysant les 20 premiers octets de la partie utile PAYL de chaque paquet IP mémorisé (partie référencée PAYL(TUNNEL) sur la figure 6B), le module de mémorisation 11B est en mesure de déterminer la présence ou non d'un tunnel encapsulant les données applicatives. On note que le tunnel peut être encapsulé lui-même dans un autre tunnel, et ainsi de suite. Sur détection de la présence d'un tel tunnel, le module de mémorisation 11B supprime ce tunnel en désencapsulant les paquets IP, c'est-à-dire en extrayant l'entête IP HEAD(APP) et les données utiles applicatives PAYL(APP) sur la figure 6B, des paquets IP. Les caractéristiques C1 à C6 sont ensuite déterminées séparément pour chaque flux surveillé à partir des données extraites par le module 11B.

Plus précisément, dans le mode de réalisation décrit ici, pour chaque flux surveillé (flux entrant et/ou sortant de chacune des entrées sélectionnées de la table NAPT 12), le module de mémorisation 11B obtient la caractéristique C1 représentative du protocole applicatif (ex. VoIP, FTP, etc.) utilisé par chaque flux surveillé à partir du numéro de port de destination utilisé (qui peut être fixe pour certains protocoles applicatifs) et/ou des premiers octets de données utiles des paquets véhiculés dans le flux et mémorisés sur la fenêtre temporelle de durée T.

A titre d'exemples :
- pour une application SIP de voix sur IP, le port de destination est 5060 et le protocole de transport est UDP si la taille du paquet IP est inférieure à 1300 octets, TCP sinon. En outre, pour une telle application, il convient de noter que la chaîne de caractères « SIP/2.0 » est systématiquement présente dans les premiers octets des données utiles des paquets IP ;
- pour un téléchargement par FTP, le protocole de transport est TCP et le port de destination est le port 21 ;
- etc.

Pour chaque flux surveillé, le module de mémorisation 11B obtient par ailleurs ici une caractéristique C2 représentative d'une signature applicative correspondant au contenu applicatif véhiculé par ce flux. Il obtient cette signature applicative en comparant ici les premiers octets des données utiles DATA(APP) de chaque paquet IP mémorisé pour ce flux (i.e. données utiles après extraction le cas échéant des différents tunnels utilisés pour encapsuler les données applicatives) avec des signatures dites de référence, prédéterminées et contenues dans une base de signatures de référence. La base de signatures de référence est ici stockée par exemple dans la mémoire non volatile 16 du point d'accès AP 11. En variante, elle peut être téléchargée par le point d'accès AP 11 (notamment à chaque mise à jour avec une nouvelle signature de référence correspondant à un nouveau type de trafic).

Les signatures de référence stockées dans la base correspondent à des profils de trafics applicatifs : elles peuvent permettre d'identifier le type de contenu applicatif véhiculé par un flux (ex. voix sur IP générée par une application particulière, données de téléchargement de fichier FTP (File Transfer Protocol) issues d'un même serveur de téléchargement, etc.). De tels profils de trafics applicatifs sont généralement connus des opérateurs des réseaux. Ils dépendent bien entendu du protocole applicatif considéré. Ainsi, par exemple, pour un service de téléchargement de fichier FTP, une signature de référence consiste :
- d'une part, en la présence dans la partie utile PAYL des paquets IP, d'une expression de type « % ftp nom_du_serveur_ftp » ; et
- d'autre part, une fois la connexion effective avec le serveur ftp, en la présence dans la partie utile PAYL de l'un des paquets IP, d'une expression du type « connected to nom_du_serveur_ftp ».

Le module de mémorisation 11B recherche donc dans les paquets IP des flux entrant et sortant surveillés sur la fenêtre temporelle T, s'il existe une coïncidence (i.e. une similitude ou une identité) avec l'une des signatures de référence stockées dans la base de signatures de référence. Le cas échéant, la signature de référence pour laquelle la coïncidence a été détectée est considérée comme la signature applicative du flux considéré. Cette signature applicative est alors stockée dans la mémoire tampon.

On note qu'il se peut qu'aucune signature applicative ne puisse être déterminée par le module de mémorisation 11B pour un flux (par exemple parce que la base de signatures de référence utilisée n'est pas assez complète). Dans ce cas, la caractéristique C2 mémorisée reflète cette incapacité.

Dans le mode de réalisation décrit ici, le module de mémorisation 11B détermine également, pour chaque flux considéré, une caractéristique C3 représentant le nombre de paquets de données IP véhiculés par ce flux durant la période de temps T. Il utilise à cet effet un compteur de paquets pour chacun des flux surveillés.

En outre, une taille des paquets de données IP véhiculés par le flux durant la fenêtre temporelle de durée T est déterminée par le module de mémorisation 11B pour chaque flux considéré. La taille déterminée peut être par exemple la taille minimale des paquets, ou encore la taille maximale des paquets ou encore la taille moyenne ou encore la distribution de tailles des paquets échangés sur chaque flux pendant la durée T. Cette caractéristique C4 est déterminée à partir des informations contenues dans les entêtes des paquets de données IP mémorisés sur la durée T.

De même, le module de mémorisation 11B détermine pour chaque flux surveillé une caractéristique C5 représentative d'une périodicité des paquets de données véhiculés par le flux sur la période de temps T. Dans le mode de réalisation décrit ici, cette caractéristique C5 correspond à un intervalle minimal, maximal ou moyen entre les paquets de données IP transportés par chaque flux. Par exemple, pour une communication VoIP gérée par des opérateurs de télécommunications, les paquets de données correspondant au flux média audio auront une périodicité de 10ms ou 20ms ou 30ms ou 40ms et ces paquets auront une taille fixe.

On note que la détermination des caractéristiques C3 à C5 peut nécessiter la prise en compte d'une éventuelle fragmentation des trames transportées par les flux mise en œuvre par le terminal T1 lorsqu'il fait office de rebond. Une telle fragmentation peut être aisément détectée par le module de mémorisation 11B à partir de l'entête des paquets de données IP transportés par les flux (champ de position du fragment évoqué précédemment). Sur détection d'une telle fragmentation, le module de mémorisation 11B met à jour les caractéristiques C3 à C5 pour refléter cette fragmentation (par exemple il divise par deux le nombre de paquets obtenus pour C2).

Enfin, dans le mode de réalisation décrit ici, le module de mémorisation 11B extrait également pour chaque flux surveillé une caractéristique C6 représentative d'une information de différentiation de services contenue dans les paquets de données véhiculés par le flux. Cette information est extraite du champ de l'entête des paquets de données IP correspondant au type de service concerné par le paquet. On note que pour un même flux surveillé, cette information est identique pour tous les paquets de données IP considérés sur la période de temps T.

Les caractéristiques C1 à C6 ainsi déterminées par le module de mémorisation 11B sur la fenêtre temporelle de durée T sont stockées dans la mémoire tampon du point d'accès 11.

Suite à cette mémorisation, le point d'accès 11, via son module de comparaison 11C, compare tout ou partie des caractéristiques C1 à C6 obtenues pour les différents flux surveillés sur la durée T (étape F40). Plus précisément, il compare tout ou partie des caractéristiques C1 à C6 obtenues pour le flux entrant (INC_F(SELINP1), respectivement INC_F(SELINP2)) d'une des entrées (SELINP1, respectivement SELINP2) sélectionnées dans la table NAPT 12 avec les caractéristiques C1 à C6 correspondantes obtenues pour le flux sortant (OUT_F(SELINP2), respectivement OUT_F(SELINP1)) de l'autre entrée (SELINP2, respectivement SELINP1) sélectionnée dans la table NAPT 12, et inversement.

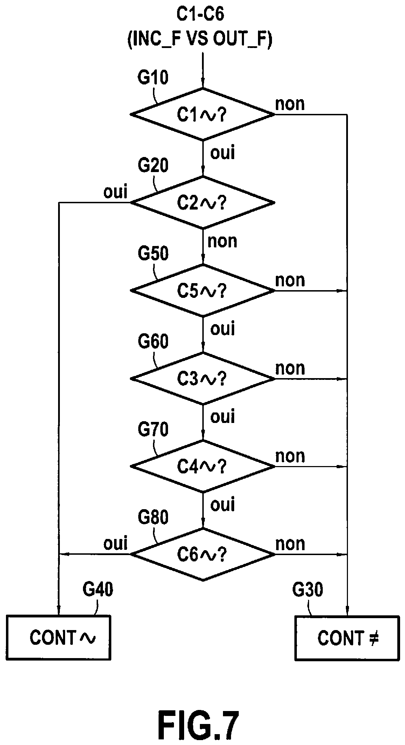

Cette comparaison est réalisée ici selon un ordre prédéterminé illustré sur la **figure 7****.** Bien entendu, cet ordre n'est donné qu'à titre illustratif, et un autre ordre peut être considéré pour comparer les caractéristiques C1 à C6.

L'ordre retenu pour comparer les caractéristiques des flux entrant et sortant entre elles illustré à la figure 7 est mis en œuvre ici une première fois pour comparer les caractéristiques C1 à C6 du flux entrant INC_F(SELINP1) avec les caractéristiques C1 à C6 du flux sortant OUT_F(SELINP2). Si il ne résulte pas de cette comparaison que les flux INC_F(SELINP1) et OUT_F(SELINP2) véhiculent un contenu applicatif de même nature, alors la comparaison est mise en œuvre une seconde fois entre les caractéristiques C1 à C6 du flux entrant INC_F(SELINP2) et les caractéristiques C1 à C6 du flux sortant OUT_F(SELINP1).

En variante, les deux comparaisons peuvent être menées en parallèle ou successivement par le module de comparaison 11C.

Seule la comparaison des caractéristiques C1 à C6 du flux entrant INC_F(SELINP1) avec les caractéristiques C1 à C6 du flux sortant OUT_F(SELINP2) selon l'ordre illustré à la figure 7 est détaillée ci-après, la comparaison des caractéristiques C1 à C6 du flux entrant INC_F(SELINP2) avec les caractéristiques C1 à C6 du flux sortant OUT_F(SELINP1) étant réalisée de façon identique.

Plus précisément, lors de l'étape de comparaison F40, le module de comparaison 11C compare tout d'abord les protocoles applicatifs utilisés par le flux entrant INC_F(SELINP1) et par le flux sortant OUT_F(SELINP2) (caractéristique C1). Si les deux protocoles applicatifs sont identiques (i.e. les caractéristiques C1 mémorisées pour les deux flux pour la période temporelle T coïncident) (réponse oui à l'étape G10 de comparaison des caractéristiques C1), alors le module de comparaison 11C passe à la comparaison des caractéristiques C2 du flux entrant INC_F(SELINP1) et du flux sortant OUT_F(SELINP2) (étape G20).

Si les protocoles applicatifs sont différents (réponse non à l'étape G10 de comparaison des caractéristiques C1), le module de comparaison 11C du point d'accès 11 détecte immédiatement que le contenu applicatif véhiculé n'est pas de même nature sur les deux flux considérés et stoppe la comparaison des caractéristiques suivantes pour ces deux flux (étape G30). Il passe alors à la comparaison des flux INC_F(SELINP2) et OUT_F(SELINP1).

Lors de l'étape G20 de comparaison des caractéristiques C2, le module de comparaison 11C détermine si les signatures applicatives associées au flux entrant INC_F(SELINP1) et au flux sortant OUT_F(SELINP2) sont identiques. On note que cette comparaison peut nécessiter la prise en compte d'un décalage temporel entre le flux entrant et le flux sortant. En effet, le délai de routage des paquets reçus par le point d'accès AP 11 via son interface WAN et destinés au terminal de rebond T1 (ces paquets utilisent une première entrée de la table NAPT 12), le délai de traitement de ces paquets par le terminal de rebond T1 (incluant par exemple la lecture du paquet via la pile TCP/IP du terminal T1, l'extraction éventuelle d'informations liées au tunnel le cas échéant, la réémission des paquets vers la pile TCP/IP du terminal T1), puis le délai de routage des paquets depuis le terminal T1 vers le point d'accès AP 11 (ces paquets utilisant une seconde entrée de la table NAPT 12) peuvent se traduire par un décalage temporel de quelques millisecondes à quelques secondes qu'il convient de prendre en compte lors de cette étape.

Si les signatures applicatives sont identiques (réponse oui à l'étape de comparaison G20), le module de comparaison 11C détermine que les contenus applicatifs véhiculés sur les flux entrants et sortants considérés sont de même nature et stoppe la comparaison des caractéristiques de ces deux flux (étape G40).

Si les signatures applicatives C2 des deux flux sont différentes (réponse non à l'étape de comparaison G20), le module de comparaison 11C entreprend la comparaison des caractéristiques C5 des flux INC_F(SELINP1) et OUT_F(SELINP2) représentatives de la périodicité des paquets de données sur les deux flux (étape G50). On note que des signatures applicatives différentes peuvent être détectées notamment si le module de mémorisation 11B n'est pas parvenu à déterminer ces signatures pour les flux considérés à partir de la base de signatures de référence dont il dispose.

Si le module de comparaison 11C détermine que les caractéristiques C5 des deux flux ne coïncident pas (ou ne sont pas identiques) (réponse non à l'étape G50), il en déduit que les contenus applicatifs véhiculés sur les deux flux ne sont pas de même nature et stoppe la comparaison des caractéristiques suivantes pour ces deux flux (étape G30). Il passe alors à la comparaison des flux INC_F(SELINP2) et OUT_F(SELINP1).

Si les caractéristiques C5 des flux coïncident (réponse oui à l'étape G50), le module de comparaison 11C entreprend la comparaison des caractéristiques C3 des flux INC_F(SELINP1) et OUT_F(SELINP2) représentatives du nombre de paquets de données véhiculés sur les deux flux durant la période de temps T (tenant éventuellement compte d'une fragmentation) (étape G60).

Si le module de comparaison 11C détermine que les nombres de paquets C3 des deux flux ne coïncident pas (ou ne sont pas identiques) (réponse non à l'étape G60), il en déduit que les contenus applicatifs véhiculés sur les deux flux ne sont pas de même nature et stoppe la comparaison des caractéristiques suivantes pour ces deux flux (étape G30). Il passe alors à la comparaison des flux INC_F(SELINP2) et OUT_F(SELINP1).

Si les caractéristiques C3 des flux coïncident (réponse oui à l'étape G60), le module de comparaison 11C entreprend la comparaison des caractéristiques C4 des flux INC_F(SELINP1) et OUT_F(SELINP2) représentatives de la taille des paquets de données véhiculés sur les deux flux durant la période de temps T (tenant éventuellement compte d'une fragmentation) (étape G70).

Si le module de comparaison 11C détermine que les tailles de paquets C4 des deux flux ne coïncident pas (ou ne sont pas identiques) (réponse non à l'étape G70), il en déduit que les contenus applicatifs véhiculés sur les deux flux ne sont pas de même nature et stoppe la comparaison des caractéristiques suivantes pour ces deux flux (étape G30). Il passe alors à la comparaison des flux INC_F(SELINP2) et OUT_F(SELINP1).

Si les caractéristiques C4 des flux coïncident (réponse oui à l'étape G70), le module de comparaison 11C entreprend la comparaison des caractéristiques C6 des flux INC_F(SELINP1) et OUT_F(SELINP2) représentatives de l'information de différentiation de services contenues dans les paquets (ou marquage DSCP) (étape G80).

Si les caractéristiques C6 des flux coïncident (réponse oui à l'étape G80), le module de comparaison 11C détermine que les contenus applicatifs véhiculés sur les flux entrants et sortants considérés sont de même nature et stoppe la comparaison des caractéristiques de ces deux flux (étape G40).

Si le module de comparaison 11C détermine que les caractéristiques C6 des deux flux ne coïncident pas (ou ne sont pas identiques) (réponse non à l'étape G80), il en déduit que les contenus applicatifs véhiculés sur les deux flux ne sont pas de même nature (étape G30) et passe alors à la comparaison des flux INC_F(SELINP2) et OUT_F(SELINP1).

En référence à la figure 5, si à l'issue de la comparaison des caractéristiques des flux INC_F(SELINP1) et OUT_F(SELINP2), il est déterminé par le module de comparaison 11C que les contenus applicatifs véhiculés par ces flux ne sont pas de même nature, le module de comparaison 11C réitère les étapes G10-G80 illustrées à la figure 7 sur les flux INC_F(SELINP2) et OUT_F(SELINP1).

On note que les caractéristiques C1 à C6 et l'ordinogramme illustré à la figure 7 pour tester ces caractéristiques ne sont donnés qu'à titre illustratif et ne sont pas limitatifs de l'invention. Par exemple, d'autres caractéristiques peuvent être envisagés pour déterminer si un flux entrant et un flux sortant ont un contenu applicatif de même nature, telles que notamment le calcul d'une somme de contrôle (ou « checksum » en anglais) sur les données utiles du paquet (données applicatives, autrement dit, après avoir supprimé le cas échéant les octets d'entête liés au tunnelling). Ce type de caractéristique permet de comparer aisément les contenus applicatifs de deux flux pour en déduire s'ils sont ou non de même nature.Sinon, il informe le module 11D de détection du point d'accès AP 11 de la détection de contenus applicatifs de même nature dans les flux INC_F(SELINP1) et OUT_F(SELINP2) (réponse oui à l'étape test F50). De même, si à l'issue de la comparaison des flux INC_F(SELINP2) et OUT_F(SELINP1), le module de comparaison 11C identifie des contenus applicatifs de même nature, il en informe le module 11D de détection (réponse oui à l'étape F50).

Cette notification constitue une détection d'un risque de fraude par le module 11D de détection au sens de l'invention (étape F70).

Dans le mode de réalisation décrit ici, suite à cette détection, le module de détection 11D active le module de confirmation 11E du point d'accès AP 11. Celui-ci est configuré pour mettre en œuvre une procédure de confirmation de l'existence effective d'une fraude (étape test F80). Pour mieux illustrer l'invention, on suppose ici qu'il a été détecté que les flux INC_F(SELINP1) et OUT_F(SELINP2) véhiculent des contenus applicatifs de même nature.

Dans le mode de réalisation décrit ici, pour confirmer (ou infirmer) l'existence d'une fraude, le module de confirmation 11E, par le biais de son module d'insertion 11E1, insère dans le flux entrant INC_F(SELINP1) un nombre prédéfini K de paquets comprenant un marqueur prédéterminé, K désignant un entier supérieur ou égal à 1 (par exemple K=5).

Puis il vérifie, au moyen de son module de vérification 11E2, si ces mêmes paquets marqués sont contenus dans le flux sortant OUT_F(SELINP2). Le module de vérification 11E2 peut aisément réaliser cette vérification au moyen des marqueurs qui ont été insérés dans les K=5 paquets ajoutés par le point d'accès AP 11 au flux entrant INC_F(SELINP1).

Si le module de vérification 11E2 détecte la présence des paquets marqués dans le flux sortant OUT_F(SELINP2), alors l'existence d'une fraude est confirmée par le module de confirmation 11E3 (réponse oui à l'étape F80), qui en informe le module de détection 11D.

Sinon, l'existence d'une fraude est réfutée par le module de confirmation 11E3 (réponse non à l'étape F80), et le module de détection 11D en est informé. Aucune suite n'est donnée par le point d'accès AP 11 à la détection de deux flux entrant et sortant véhiculant des contenus applicatifs de même nature (étape F90).

Après avoir informé le module de détection 11D, le point d'accès AP 11 via son module de confirmation 11E, supprime du flux les paquets marqués.

Dans le mode de réalisation décrit ici, si la fraude est confirmée, le point d'accès AP 11, via son module de détection 11D, met en œuvre une ou plusieurs actions correctives (étape F100). Ces actions peuvent être de différentes natures. Ainsi le module de détection 11D peut par exemple mettre en œuvre :
- une suppression dans la table d'associations NAPT 12 d'au moins une des entrées du couple d'entrées pour lequel il résulte de l'étape de comparaison qu'un flux entrant associé à l'une des entrées du couple transporte un contenu applicatif de même nature qu'un flux sortant associé à l'autre entrée du couple ;
- une notification de la détection du risque de fraude ou de la fraude ; et
- un redémarrage du point d'accès AP 11.

Bien entendu, d'autres actions correctives peuvent être envisagées en variante.

L'invention propose ainsi un processus simple et efficace permettant de renforcer la sécurité des réseaux au niveau des points d'accès, et de se prémunir contre les fraudes s'appuyant sur des mécanismes de rebond.

Dans le mode de réalisation décrit ici, on a supposé qu'une seule adresse IP était allouée au point d'accès AP 11 sur le réseau WAN NW2. En variante, plusieurs adresses IP distinctes peuvent être allouées au point d'accès AP.

Par ailleurs, dans le mode de réalisation décrit ici, on a envisagé de se prémunir contre une fraude s'appuyant sur un seul équipement du réseau local. En variante, comme évoqué précédemment, plusieurs équipements pourraient être impliqués dans le mécanisme de rebond exploité par la fraude.

L'invention peut être aisément appliquée à ces deux cas de figure : à cet effet, il suffit de ne plus limiter l'analyse aux seules entrées de la table d'associations d'adresses correspondant à une même adresse IP privée, mais à prendre en compte toutes les entrées de la table lors de la mémorisation et de la comparaison des caractéristiques (i.e. l'étape de sélection consiste donc implicitement à sélectionner toutes les entrées de la table AP 12). On note toutefois que les entrées sont toujours comparées deux à deux lors de l'étape de comparaison (i.e. on considère alors des couples d'entrées auxquels on applique individuellement toutes les étapes décrites précédemment pour les entrées SELINP1 et SELINP2), de sorte à déterminer si il existe au moins un couple d'entrées parmi tous les couples d'entrées possibles pouvant être formés, pour lequel un flux entrant associé à l'une des entrées du couple transporte un contenu applicatif de même nature qu'un flux sortant associé à l'autre entrée du couple. L'existence d'un tel couple entraîne une détection d'un risque de fraude.

## Revendications

1. **Procédé** de surveillance destiné à être mis en œuvre par un point d'accès (AP11) à un réseau de télécommunications (NW2), ce point d'accès étant apte à maintenir une table d'associations d'adresses (NAPT 12) comprenant au moins une entrée (IN1, IN2, IN3) associant à une adresse de transport privée une adresse de transport publique, chaque adresse de transport comprenant une adresse IP et un port, le procédé de surveillance comprenant :
- une étape d'obtention (F20, F30) d'au moins une première caractéristique sur une première période de temps pour chaque flux entrant et chaque flux sortant associés à au moins deux premières entrées de la table d'associations d'adresses ;et
- une étape de détection (F40, F70) d'un risque de fraude si, pour au moins un couple d'entrées parmi lesdites au moins deux première entrées, il résulte d'au moins une première caractéristique obtenue pour un flux entrant associé à l'une des entrées du couple et de ladite au moins une première caractéristique correspondante obtenue pour un flux sortant associé à l'autre entrée du couple, qu'un flux entrant associé à l'une des entrées du couple transporte un contenu applicatif de même nature qu'un flux sortant associé à l'autre entrée du couple.

2. Procédé de surveillance selon la revendication 1 dans lequel lesdites au moins deux premières entrées correspondent à la même adresse IP privée dans la table d'associations d'adresses.

3. Procédé de surveillance selon la revendication 1 ou 2 dans lequel ladite au moins une première caractéristique obtenue pour un flux comprend au moins une caractéristique parmi :
- un protocole applicatif utilisé par le flux durant la première période de temps;
- une signature applicative correspondant au contenu applicatif véhiculé par le flux durant la première période de temps;
- un nombre de paquets de données véhiculés par le flux durant la première période de temps;
- une taille de paquets de données véhiculés par le flux durant la première période de temps; et
- une périodicité des paquets de données véhiculés par le flux sur la première période de temps.

4. Procédé de surveillance selon la revendication 3 dans lequel ladite au moins une première caractéristique obtenue pour un flux comprend en outre une information de différentiation de services contenue dans au moins un paquet de données véhiculé par le flux.

5. Procédé de surveillance selon l'une quelconque des revendications 1 à 4 comprenant, pour au moins un desdits flux :
- une étape d'extraction de chaque paquet de données véhiculé par le flux sur ladite première période de temps, d'un entête et/ou d'au moins une partie des données utiles contenues dans ledit paquet ; et
- une étape de détermination d'au moins une première caractéristique obtenue pour ledit flux à partir des entêtes et/ou des données utiles extraites des paquets de données véhiculés par ledit flux.

6. Procédé de surveillance selon la revendication 5 comprenant en outre :
- une étape de détection, pour ledit flux, d'une encapsulation des paquets de données véhiculés par ce flux dans un tunnel ; et
- une étape de désencapsulation desdits paquets de données préalable à l'étape d'extraction.

7. Procédé de surveillance selon l'une quelconque des revendications 1 à 6 comprenant en outre une étape (F100) de mise en œuvre d'au moins une action corrective en réponse à la détection d'un risque de fraude.

8. Procédé de surveillance selon la revendication 7 dans lequel ladite au moins une action corrective comprend au moins une action parmi :
- une suppression dans la table d'associations d'au moins une des entrées dudit couple d'entrées pour lequel un flux entrant associé à l'une des entrées du couple transporte un contenu applicatif de même nature qu'un flux sortant associé à l'autre entrée du couple ;
- une notification de la détection du risque de fraude ; et
- un redémarrage du point d'accès.

9. Procédé de surveillance selon l'une quelconque des revendications 1 à 8 comprenant en outre, en réponse à une détection d'un risque de fraude, et pour un couple d'entrées pour lequel un flux entrant associé à l'une des entrées du couple transporte un contenu applicatif de même nature qu'un flux sortant associé à l'autre entrée du couple :
- une étape d'insertion d'au moins un paquet comprenant un premier marqueur dans ledit flux entrant ;
- une étape de détection d'une présence ou d'une absence dudit au moins un paquet marqué dans ledit flux sortant ; et
- une étape de confirmation de l'existence d'une fraude si une présence dudit au moins un paquet marqué est détectée.

10. Procédé de surveillance selon la revendication 9 comprenant en outre une étape de suppression dudit au moins un paquet marqué après ladite étape de détection.

11. **Programme** d'ordinateur (PROG) comportant des instructions pour l'exécution des étapes du procédé de surveillance selon l'une quelconque des revendications 1 à 10 lorsque ledit programme est exécuté par un ordinateur.

12. **Support** d'enregistrement lisible par un ordinateur sur lequel est enregistré un programme d'ordinateur comprenant des instructions pour l'exécution des étapes du procédé de surveillance selon l'une quelconque des revendications 1 à 10.

13. **Point d'accès** (AP 11) à un réseau de télécommunications (NW2), apte à maintenir une table d'associations d'adresses (NAPT 12) comprenant au moins une entrée associant à une adresse de transport privée une adresse de transport publique sur ledit réseau, chaque adresse de transport comprenant une adresse IP et un port, ledit point d'accès comprenant :
- un module d'obtention (11A,11B) configuré pour obtenir au moins une première caractéristique sur une première période de temps pour chaque flux entrant et chaque flux sortant associés à au moins deux premières entrées de la table d'associations d'adresses ; et
- un module de détection (11C, 11D) d'un risque de fraude, activé si, pour au moins un couple d'entrées parmi lesdites au moins deux première entrée, il résulte d'au moins une première caractéristique obtenue pour un flux entrant associé à l'une des entrées du couple et de ladite au moins une première caractéristique correspondante obtenue pour un flux sortant associé à l'autre entrée du couple, qu'un flux entrant associé à l'une des entrées du couple transporte un contenu applicatif de même nature qu'un flux sortant associé à l'autre entrée du couple.

14. Point d'accès (AP 11) selon la revendication 13 dans lequel lesdites au moins deux premières entrées correspondent à la même adresse IP privée dans la table d'associations d'adresses.

15. Point d'accès (AP11) selon la revendication 13 ou 14 comprenant en outre des modules activés en cas de détection d'un risque de fraude par le module de détection, et pour un couple d'entrées pour lequel un flux entrant associé à l'une des entrées du couple transporte un contenu applicatif de même nature qu'un flux sortant associé à l'autre entrée du couple, ces modules comprenant :
- un module d'insertion (11E1), configuré pour insérer au moins un paquet comprenant un premier marqueur dans ledit flux entrant ;
- un module de vérification (11E2), configuré pour détecter une présence ou une absence dudit au moins un paquet marqué dans ledit flux sortant ; et
- un module de confirmation (11E3) de l'existence d'une fraude si une présence dudit au moins un paquet marqué est détectée par le module de vérification.

## Patentansprüche

1. Überwachungsverfahren, das dazu bestimmt ist, von einem Zugangspunkt (AP11) zu einem Telekommunikationsnetz (NW2) durchgeführt zu werden, wobei dieser Zugangspunkt eine Adressenzuordnungstabelle (NAPT12) aufrechterhalten kann, die mindestens einen Eingang (IN1, IN2, IN3) enthält, der einer privaten Transportadresse eine öffentliche Transportadresse zuordnet, wobei jede Transportadresse eine IP-Adresse und einen Port enthält, wobei das Überwachungsverfahren enthält:
- einen Schritt des Erhalts (F20, F30) mindestens eines ersten Merkmals über einen ersten Zeitraum für jeden eingehenden Fluss und jeden ausgehenden Fluss, die mindestens zwei ersten Eingängen der Adressenzuordnungstabelle zugeordnet sind; und
- einen Schritt der Erfassung (F40, F70) eines Betrugsrisikos, wenn für mindestens ein Paar von Eingängen unter den mindestens zwei ersten Eingängen aus mindestens einem ersten Merkmal, das für einen einem der Eingänge des Paars zugeordneten eingehenden Fluss erhalten wird, und aus dem mindestens einen entsprechenden ersten Merkmal, das für einen dem anderen Eingang des Paars zugeordneten ausgehenden Fluss erhalten wird, hervorgeht, dass ein einem der Eingänge des Paars zugeordneter eingehender Fluss einen Anwendungsinhalt gleicher Beschaffenheit transportiert wie ein dem anderen Eingang des Paars zugeordneter ausgehender Fluss.

2. Überwachungsverfahren nach Anspruch 1, wobei die mindestens zwei ersten Eingänge der gleichen privaten IP-Adresse in der Adressenzuordnungstabelle entsprechen.

3. Überwachungsverfahren nach Anspruch 1 oder 2, wobei das für einen Fluss erhaltene mindestens eine erste Merkmal mindestens ein Merkmal enthält unter:
- einem Anwendungsprotokoll, das während des ersten Zeitraums vom Fluss genutzt wird;
- einer Anwendungssignatur, die dem Anwendungsinhalt entspricht, der vom Fluss während des ersten Zeitraums befördert wird;
- einer Anzahl von Datenpaketen, die während des ersten Zeitraums vom Fluss befördert werden;
- einer Größe von während des ersten Zeitraums vom Fluss beförderten Datenpaketen; und
- einer Periodizität der im ersten Zeitraum vom Fluss beförderten Datenpakete.

4. Überwachungsverfahren nach Anspruch 3, wobei das für einen Fluss erhaltene mindestens eine erste Merkmal außerdem eine Differenzierungsinformation von Diensten enthält, die in mindestens einem vom Fluss beförderten Datenpaket enthalten ist.

5. Überwachungsverfahren nach einem der Ansprüche 1 bis 4, das für mindestens einen der Flüsse enthält:
- einen Schritt der Entnahme aus jedem im ersten Zeitraum vom Fluss beförderten Datenpaket einer Kopfzeile und/oder mindestens eines Teils der Nutzdaten, die im Paket enthalten sind; und
- einen Schritt der Bestimmung mindestens eines ersten für den Fluss erhaltenen Merkmals ausgehend von den aus den vom Fluss beförderten Datenpaketen entnommenen Kopfzeilen und/oder Nutzdaten.

6. Überwachungsverfahren nach Anspruch 5, das außerdem enthält:
- einen Schritt der Erfassung, für den Fluss, einer Einkapselung der von diesem Fluss beförderten Datenpakete in einem Tunnel; und
- einen Schritt der Entkapselung der Datenpakete vor dem Entnahmeschritt.

7. Überwachungsverfahren nach einem der Ansprüche 1 bis 6, das außerdem einen Schritt (F100) der Durchführung mindestens einer Abhilfemaßnahme als Reaktion auf die Erfassung eines Betrugsrisikos enthält.

8. Überwachungsverfahren nach Anspruch 7, wobei die mindestens eine Abhilfemaßnahme mindestens eine Maßnahme enthält unter:
- einem Löschen in der Zuordnungstabelle mindestens eines der Eingänge des Paars von Eingängen, für das ein einem der Eingänge des Paars zugeordneter eingehender Fluss einen Anwendungsinhalt gleicher Beschaffenheit transportiert wie ein dem anderen Eingang des Paars zugeordneter ausgehender Fluss;
- einer Mitteilung der Erfassung des Betrugsrisikos; und
- einem Neustart des Zugangspunkts.

9. Überwachungsverfahren nach einem der Ansprüche 1 bis 8, das außerdem als Antwort auf eine Erfassung eines Betrugsrisikos und für ein Paar von Eingängen, für das ein einem der Eingänge des Paars zugeordneter eingehender Fluss einen Anwendungsinhalt gleicher Beschaffenheit wie ein dem anderen Eingang des Paars zugeordneter ausgehender Fluss transportiert, enthält:
- einen Schritt der Einfügung mindestens eines einen ersten Marker enthaltenden Pakets in den eingehenden Fluss;
- einen Schritt der Erfassung einer Anwesenheit oder einer Abwesenheit des mindestens einen markierten Pakets im ausgehenden Fluss; und
- einen Schritt der Bestätigung der Existenz eines Betrugs, wenn eine Anwesenheit des mindestens einen markierten Pakets erfasst wird.

10. Überwachungsverfahren nach Anspruch 9, das außerdem einen Schritt des Löschens des mindestens einen markierten Pakets nach dem Erfassungsschritt enthält.

11. Computerprogramm (PROG), das Anweisungen zur Ausführung der Schritte des Überwachungsverfahrens nach einem der Ansprüche 1 bis 10 aufweist, wenn das Programm von einem Computer ausgeführt wird.

12. Computerlesbarer Aufzeichnungsträger, auf dem ein Computerprogramm aufgezeichnet ist, das Anweisungen zur Durchführung der Schritte des Überwachungsverfahrens nach einem der Ansprüche 1 bis 10 enthält.

13. Zugangspunkt (AP11) zu einem Telekommunikationsnetz (NW2), der eine Adressenzuordnungstabelle (NAPT12) aufrechterhalten kann, die mindestens einen Eingang enthält, der einer privaten Transportadresse eine öffentliche Transportadresse auf dem Netz zuordnet, wobei jede Transportadresse eine IP-Adresse und einen Port enthält, wobei der Zugangspunkt enthält:
- ein Erhaltensmodul (11A, 11B), das konfiguriert ist, mindestens ein erstes Merkmal über einen ersten Zeitraum für jeden eingehenden Fluss und jeden ausgehenden Fluss zu erhalten, die mindestens zwei ersten Eingängen der Adressenzuordnungstabelle zugeordnet sind; und
- ein Erfassungsmodul (11C, 11D) eines Betrugsrisikos, das aktiviert wird, wenn für mindestens ein Paar von Eingängen unter den mindestens zwei ersten Eingängen aus mindestens einem ersten Merkmal, das für einen einem der Eingänge des Paars zugeordneten eingehenden Fluss erhalten wird, und aus dem mindestens einen entsprechenden ersten Merkmal, das für einen dem anderen Eingang des Paars zugeordneten ausgehenden Fluss erhalten wird, hervorgeht, dass ein einem der Eingänge des Paars zugeordneter eingehender Fluss einen Anwendungsinhalt gleicher Beschaffenheit wie ein dem anderen Eingang des Paars zugeordneter ausgehender Fluss transportiert.

14. Zugangspunkt (AP11) nach Anspruch 13, wobei die mindestens zwei ersten Eingänge der gleichen privaten IP-Adresse in der Adressenzuordnungstabelle entsprechen.

15. Zugangspunkt (AP11) nach Anspruch 13 oder 14, der außerdem Module enthält, die im Fall einer Erfassung eines Betrugsrisikos vom Erfassungsmodul aktiviert werden, und für ein Paar von Eingängen, für das ein einem der Eingänge des Paars zugeordneter eingehender Fluss einen Anwendungsinhalt gleicher Beschaffenheit transportiert wie ein dem anderen Eingang des Paars zugeordneter ausgehender Fluss, wobei diese Module enthalten:
- ein Einfügungsmodul (11E1), das konfiguriert ist, mindestens ein einen ersten Marker enthaltendes Paket in den eingehenden Fluss einzufügen;
- ein Überprüfungsmodul (11E2), das konfiguriert ist, eine Anwesenheit oder eine Abwesenheit des mindestens einen markierten Pakets im ausgehenden Fluss zu erfassen; und
- ein Bestätigungsmodul (11E3) der Existenz eines Betrugs, wenn eine Anwesenheit des mindestens einen markierten Pakets vom Überprüfungsmodul erfasst wird.

## Claims

1. Surveillance method intended to be implemented by an access point (AP11) to a telecommunications network (NW2), this access point being able to maintain an address association table (NAPT 12) comprising at least one entry (IN1, IN2, IN3) associating a public transport address with a private transport address, each transport address comprising an IP address and a port, the surveillance method comprising:
- a step of obtaining (F20, F30) of at least one first characteristic over a first time period for each incoming stream and each outgoing stream associated with at least two first entries of the address association table; and
- a step of detection (F40, F70) of a risk of fraud if, for at least one pair of entries out of said at least two first entries, the result from at least one first characteristic obtained for an incoming stream associated with one of the entries of the pair and from said at least one first corresponding characteristic obtained for an outgoing stream associated with the other entry of the pair is that an incoming stream associated with one of the entries of the pair transports an application content of the same nature as an outgoing stream associated with the other entry of the pair.

2. Surveillance method according to Claim 1, wherein said at least two first entries correspond to the same private IP address in the address association table.

3. Surveillance method according to Claim 1 or 2, wherein said at least one first characteristic obtained for a stream comprises at least one characteristic out of:
- an application protocol used by the stream during the first time period;
- an application signature corresponding to the application content conveyed by the stream during the first time period;
- a number of data packets conveyed by the stream during the first time period;
- a size of data packets conveyed by the stream during the first time period; and
- a periodicity of the data packets conveyed by the stream over the first time period.

4. Surveillance method according to Claim 3, wherein said at least one first characteristic obtained for a stream also comprises service differentiation information contained in at least one data packet conveyed by the stream.

5. Surveillance method according to any one of Claims 1 to 4, comprising, for at least one of said streams:
- a step of extraction, from each data packet conveyed by the stream over said first time period, of a header and/or of at least a part of the payload data contained in said packet; and
- a step of determination of at least one first characteristic obtained for said stream from the headers and/or the payload data extracted from the data packets conveyed by said stream.

6. Surveillance method according to Claim 5, further comprising:
- a step of detection, for said stream, of an encapsulation of the data packets conveyed by this stream in a tunnel; and
- a step of de-encapsulation of said data packets prior to the extraction step.

7. Surveillance method according to any one of Claims 1 to 6, further comprising a step (F100) of implementation of at least one corrective action in response to the detection of a risk of fraud.

8. Surveillance method according to Claim 7, wherein said at least one corrective action comprises at least one action out of:
- a deletion in the association table of at least one of the entries of said pair of entries for which an incoming stream associated with one of the entries of the pair transports an application content of the same nature as an outgoing stream associated with the other entry of the pair;
- a notification of the detection of the risk of fraud; and
- a restarting of the access point.

9. Surveillance method according to any one of Claims 1 to 8, further comprising, in response to a detection of a risk of fraud, and for a pair of entries for which an incoming stream associated with one of the entries of the pair transports an application content of the same nature as an outgoing stream associated with the other entry of the pair:
- a step of insertion of at least one packet comprising a first marker into said incoming stream;
- a step of detection of a presence or of an absence of said at least one marked packet in said outgoing stream; and
- a step of confirmation of the existence of a fraud if a presence of said at least one marked packet is detected.

10. Surveillance method according to Claim 9, further comprising a step of deletion of said at least one marked packet after said detection step.

11. Computer program (PROG) comprising instructions for the execution of the steps of the surveillance method according to any one of Claims 1 to 10 when said program is run by a computer.

12. Computer-readable storage medium on which is stored a computer program comprising instructions for the execution of the steps of the surveillance method according to any one of Claims 1 to 10.

13. Access point (AP11) to a telecommunications network (NW2), able to maintain an address association table (NAPT 12) comprising at least one entry associating a public transport address on said network with a private transport address, each transport address comprising an IP address and a port, said access point comprising:
- an obtaining module (11A, 11B) configured to obtain at least one first characteristic over a first time period for each incoming stream and each outgoing stream associated with at least two first entries of the address association table; and
- a detection module (11C, 11D) for detecting a risk of fraud, activated if, for at least one pair of entries out of said at least two first entries, the result from at least one first characteristic obtained for an incoming stream associated with one of the entries of the pair and from said at least one first corresponding characteristic obtained for an outgoing stream associated with the other entry of the pair is that an incoming stream associated with one of the entries of the pair transports an application content of the same nature as an outgoing stream associated with the other entry of the pair.

14. Access point (AP11) according to Claim 13, wherein said at least two first entries correspond to the same private IP address in the address association table.

15. Access point (AP11) according to Claim 13 or 14, further comprising modules activated in the case of detection of a risk of fraud by the detection module, and for a pair of entries for which an incoming stream associated with one of the entries of the pair transports an application content of the same nature as an outgoing stream associated with the other entry of the pair, these modules comprising:
- an insertion module (11E1), configured to insert at least one packet comprising a first marker into said incoming stream;
- a checking module (11E2), configured to detect a presence or an absence of said at least one marked packet in said outgoing stream; and
- a confirmation module (11E3) for confirming the existence of a fraud if a presence of said at least one marked packet is detected by the checking module.
